# EUROPÄISCHE PATENTSCHRIFT

(11) **EP 2 840 186 B1**
(45) Veröffentlichungstag und Bekanntmachung des Hinweises auf die Patenterteilung: **10.05.2017**
(21) Anmeldenummer: 14178643.4
(22) Anmeldetag: 25.07.2014
(51) Int. Cl.: E02F 3/36, A01D 87/00, E02F 3/627, A01B 59/06

(54) **Befestigungsvorrichtung für eine Befestigung eines Frontladers an einem Arbeitsfahrzeug**
Fastening device for fixing a front loader to a work vehicle
Dispositif de fixation d'un chargeur frontal sur un véhicule de travail

(30) Priorität: 30.07.2013 DE 102013108171
(43) Veröffentlichungstag der Anmeldung: 25.02.2015
(73) Patentinhaber: Wilhelm Stoll Maschinenfabrik GmbH, 38268 Lengede/Broistedt (DE)
(72) Erfinder: Hanusch, Thomas, 38855 Wernigerode (DE)
(74) Vertreter: REHBERG HÜPPE + PARTNER

(56) Entgegenhaltungen:
- DE-A1- 3 229 947
- D: "ROBUST F", , 2. Juli 2010 (2010-07-02), Seiten 1-16, XP055178573, Gefunden im Internet: URL:http://www.hilzinger.ch/documents/Stol lfrontlader_Robust.pdf [gefunden am 2015-03-23]

## Beschreibung

### TECHNISCHES GEBIET DER ERFINDUNG

Die Erfindung betrifft eine Befestigungsvorrichtung, welche Einsatz findet, um lösbar ein Anbaugerät, insbesondere einen Frontlader, an ein Arbeitsfahrzeug, insbesondere einen Traktor, zu befestigen.

### STAND DER TECHNIK

DE 32 29 947 C2 offenbart einen Frontlader mit einem J-förmigen Anbauhaken. Der Anbauhaken bildet im gekrümmten Bereich des J eine erste Aufnahme sowie in einem gabelförmigen Endbereich des Vertikalschenkels des J eine zweite Aufnahme. In der an dem Traktor montierten Stellung stützt sich der Frontlader im Bereich der beiden Aufnahmen mit zwei quer zur Fahrzeuglängsachse orientiertem Lagerzapfen an dem Anbauhaken des Traktors ab. Um zu vermeiden, dass bei auf den Frontlader wirkenden Kräften der Lagerzapfen unbeabsichtigt aus der ersten Aufnahme austritt, muss die Bewegung des Lagerzapfens relativ zu der ersten Aufnahme des Anbauhakens nach unten durch ein Verriegelungselement blockiert werden. Gemäß DE 32 29 947 C2 ist das Verriegelungselement als Keil ausgebildet, dessen Unterseite in einer Verriegelungsposition an dem Vertikalschenkel des J abgestützt ist, während die Oberseite des Keils an dem Lagerzapfen anliegt. Der Keil ist hierbei über eine vorgespannte Verriegelungsfeder in Richtung der Verriegelungsposition beaufschlagt, womit der Zapfen in der ersten Aufnahme mit einer Verriegelungskraft eingeklemmt wird. Ein Federfußpunkt der Verriegelungsfeder ist an dem Verriegelungselement abgestützt ist, während der andere Federfußpunkt an einem starr mit dem Anbauhaken verbundenen Tragelement abgestützt ist. Eine an dem Verriegelungselement angelenkte Betätigungsstange erstreckt sich durch die Verriegelungsfeder und das Tragelement, so dass ein Betätigungshebel, der in dem nach außen aus dem Tragelement auskragender Endbereich der Betätigungsstange angeordnet ist, von dem Benutzer manuell betätigt werden kann. Befindet sich das Verriegelungselement in der Verriegelungsposition, muss der Benutzer Betätigungskräfte in Verriegelungsrichtung auf den Betätigungshebel aufbringen, welche größer sind als die Vorspannkraft der Verriegelungsfeder in der Verriegelungsposition, um zum Lösen der Befestigungsvorrichtung das Verriegelungselement aus der ersten Aufnahme zu ziehen. Mit zunehmender Bewegung des Verriegelungselements aus der Verriegelungsposition müssen die vom Benutzer aufzubringenden Betätigungskräfte größer werden. Um ein Spiel des Lagerzapfens in der ersten Aufnahme auch bei großen auf den Frontlader wirkenden Kräften zu vermeiden, welches im Betrieb unter Umständen sicht- und hörbar ist, wird ein verhältnismäßig hohes Kraftniveau für die Verriegelungskraft der Verriegelungsfeder in der Verriegelungsposition angestrebt, was große erforderliche Betätigungskräfte des Benutzers für die Bewegung des Verriegelungselements aus der Verriegelungsposition bedingt. Ist durch manuelle Betätigung des Betätigungshebels das Verriegelungselement in eine Freigabeposition bewegt, kann die Betätigungsstange mit dem Betätigungshebel derart um die Längsachse verdreht werden, dass der Betätigungshebel einen Rastiervorsprung hintergreift. Die Verriegelungsfeder presst dann nach Wegfall der manuellen Betätigungskraft den Betätigungshebel gegen den Rastiervorsprung, womit die Freigabeposition gesichert ist.

In den Produktprospekten **"PROFILINE P 1541-DE"** sowie **"FRONTLADER ROBUST F P1368A DE"** der Anmelderin sind Befestigungsvorrichtungen bekannt, bei welchen die manuell auf das Betätigungsorgan aufzubringende Kraft nicht der Verriegelungskraft der Verriegelungsfeder entsprechen muss, sondern um eine Größenordnung kleiner sein kann als diese. Hierzu ist der dem Verriegelungselement abgewandte Federfußpunkt der Verriegelungsfeder an einem Abstützelement abgestützt. Das Abstützelement ist über einen Betätigungshebel um eine Schwenkachse, welche der Längsachse des Abstützelements und koaxial zur Verriegelungsrichtung orientiert ist, verschwenkbar. Der Betätigungshebel ist dabei in einer Kulisse zwangsgeführt. Die Kulisse ist gegenüber der Umfangsrichtung der Schwenkachse des Abstützelements mit einem spitzen Winkel geneigt ist. Infolge der Neigung der Kulisse geht eine Verschwenkung des Abstützelements über den Betätigungshebel um die Schwenkachse einher mit einer axialen Bewegung des Abstützelements und damit des Federfußpunkts der Verriegelungsfeder. Die geneigte Kulisse stellt somit einen Wandler dar, welcher je nach Neigungswinkel der Kulisse eine manuelle Betätigungskraft, die der Benutzer auf den Betätigungshebel aufbringt, umwandelt in eine in Richtung der Schwenkachse und damit in Verriegelungswirkung wirkende größere Kraft. Durch den Einsatz dieses kraftübersetzenden Wandlers kann auch für eine große gewünschte Vorspannkraft der Verriegelungsfeder in der Verriegelungsposition ein niedriges Kraftniveau für die Betätigung des Betätigungshebels gewährleistet werden. Um zu vermeiden, dass sich der Betätigungshebel unerwünscht aus der Verriegelungsposition in der Kulisse löst, ist die Kulisse mit einer Rastiervertiefung ausgebildet, in welche der Betätigungshebel in der Verriegelungsposition einrastet, indem der Betätigungshebel über die Verriegelungsfeder in die Rastiervertiefung eingepresst wird. Dies hat aber zur Folge, dass vor dem Einreichen der Verriegelungsposition das Abstützelement und der Betätigungshebel einen die Rastiervertiefung begrenzenden Rastiervorsprung überwinden müssen, womit letztendlich temporär manuell eine Verriegelungskraft in der Verriegelungsfeder erzeugt werden muss, welche höher ist als die tatsächliche Verriegelungskraft in der Verriegelungsposition. Andererseits ist zum Herbeiführen und Lösen der Rastierung des Betätigungshebels in der Rastiervertiefung der Kulisse erforderlich, dass die Vorspannung der Verriegelungsfeder um ein Ausmaß erhöht wird, welches von der Tiefe der Rastiervertiefung abhängt. Anders gesagt hängt dann aber die Betätigungskraft, welche erforderlich ist, um die Rastierung des Betätigungshebels zu lösen, ab von der Steifigkeit und Vorspannung der Verriegelungsfeder.

In DE 196 53 201 A1 wird eine Befestigungsvorrichtung für einen Oberlenker-Kupplungshaken vorgeschlagen, bei welchem in einer Aufnahme ein Verriegelungselement in Form eines Riegelbolzens zwischen einer verriegelten Stellung und einer entriegelten Stellung axial verschieblich ist. Die verriegelte Stellung ist hierbei gesichert durch eine Verriegelungsfeder, welche zwischen dem Kupplungshaken und einem Absatz des Riegelbolzens verspannt ist. Ein unbeabsichtigtes Lösen durch Verschiebung des Riegelbolzens unter zusätzlicher Beaufschlagung der Verriegelungsfeder ist dadurch vermieden, dass ein Betätigungshebel, welcher in dem der Aufnahme abgewandten Endbereich des Riegelbolzens an diesem angelenkt ist, ohne manuelle Verschwenkung des Betätigungshebels an einem Anschlag anschlägt. Wird hingegen der Betätigungshebel durch eine manuell gezogene Betätigungsschnur verschwenkt, passiert der Betätigungshebel den Anschlag. Der Betätigungshebel kommt dann in einem Endbereich zur Anlage an den Kupplungshaken und verschwenkt mit weiterem Ziehen an der Betätigungsschnur, womit entgegen der Beaufschlagung durch die Verriegelungsfeder der Riegelbolzen von der verriegelten Stellung in die entriegelte Stellung überführt wird.

### AUFGABE DER ERFINDUNG

Der Erfindung liegt die Aufgabe zugrunde, eine Befestigungsvorrichtung für eine Befestigung eines Anbaugeräts, insbesondere eines Frontladers, an einem Arbeitsfahrzeug, insbesondere einem Traktor, vorzuschlagen, welche hinsichtlich der Gestaltung der Kraftverhältnisse für die Betätigung, eine Rastiereinrichtung und/oder des Verriegelungselements verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung betrifft eine Befestigungsvorrichtung für eine Befestigung eines Anbaugeräts an einem Arbeitsfahrzeug. Beispielsweise erfolgt über die Befestigungsvorrichtung eine Befestigung eines Frontladers an einem Traktor. Die Befestigungsvorrichtung verfügt über eine Aufnahme, bei welcher es sich insbesondere um die erste Aufnahme wie eingangs erläutert handelt. Der Aufnahme ist ein Verriegelungselement zugeordnet, welches in einer Verriegelungsposition über eine Verriegelungsfeder in eine Verriegelungsrichtung beaufschlagt ist, womit mit einer Verriegelungskraft ein Lagerzapfen des Anbaugeräts zwischen der Aufnahme und dem Verriegelungselement verklemmt und fixiert ist.

Erfindungsgemäß ist ein manuell bewegbares Betätigungsorgan vorhanden, bei welchem es sich beispielsweise um einen Betätigungshebel handeln kann. Das Betätigungsorgan ist in eine Antriebsrichtung, insbesondere eine Schwenkrichtung, mit einem Abstützelement für einen Federfußpunkt der Verriegelungsfeder derart gekoppelt, dass eine Bewegung des Betätigungsorgans in die Antriebsrichtung eine Bewegung des Abstützelements derart verursacht, dass sich die Vorspannung der Verriegelungsfeder in Verriegelungsrichtung verändert. Für die Ausbildung des Betätigungsorgans als verschwenkbarer Betätigungshebel bedeutet dies, dass die Verschwenkung des Betätigungshebels zur Folge hat, dass das Abstützelement sich in Verriegelungsrichtung bewegt, womit der Federfußpunkt der Verriegelungsfeder bewegt wird und sich die Vorspannung der Verriegelungsfeder verändert.

Das Betätigungsorgan ist neben der Antriebsrichtung (beispielsweise eine Schwenkrichtung) zusätzlich in eine Rastierrichtung, welche von der Antriebsrichtung abweist, bewegbar. Eine derartige Bewegung des Betätigungsorgans in Rastierrichtung ist nicht mit der Bewegung des Abstützelements gekoppelt. Somit ist eine Relativbewegung zwischen Betätigungsorgan und Abstützelement in Rastierrichtung möglich. Möglich ist daher, dass das Betätigungsorgan in die Rastierrichtung bewegt und hiermit eine Rastierung erfolgt, ohne dass hiermit zwingend eine Veränderung der Vorspannung der Verriegelungsfeder in Verriegelungsrichtung verbunden ist.

Darauf hinzuweisen ist, dass es sich bei der Antriebsrichtung und der Rastierrichtung im Rahmen der Erfindung nicht zwingend um voneinander unabhängige Freiheitsgrade des Betätigungsorgans handelt. Vielmehr kann eine Zwangsführung des Betätigungsorgans derart erfolgen, dass zumindest über einen Teilbetätigungsweg
- das Betätigungsorgan nur eine Bewegung in Antriebsrichtung oder in Rastierrichtung ausführt und/oder
- eine Bewegung in Antriebsrichtung in einem vorgegebenen Ausmaß mit einer gleichzeitigen Bewegung des Betätigungsorgans in Rastierrichtung verbunden ist.

Erfindungsgemäß verfügt die Befestigungsvorrichtung auch über eine Rastiereinrichtung. Über die Rastiereinrichtung ist das Betätigungsorgan in der Verriegelungsposition (und optional auch in mindestens einer anderen Position, wie bspw. einer Freigabeposition) gegenüber einer ungewollten Bewegung gesichert. In der Rastiereinrichtung ist zur Erzeugung der Rastierwirkung ein Rastierelement, welches auch von dem Betätigungsorgan oder Betätigungshebel ausgebildet sein kann, von einer Rastierfeder in die Rastierrichtung in eine Rastiervertiefung beaufschlagt.

Erfindungsgemäß ist somit nicht eine einzige Verriegelungsfeder verantwortlich sowohl für die Erzeugung der Verriegelungskraft im Bereich der ersten Aufnahme als auch für die Erzeugung der Rastierwirkung. Vielmehr ist die Verriegelungsfeder verantwortlich für die Erzeugung der Verriegelungskraft, mit welcher der Lagerzapfen zwischen der Aufnahme und dem Verriegelungselement verspannt ist, und die Rastierfeder ist verantwortlich für die Erzeugung der Rastierwirkung. Die Trennung dieser Funktionen hat den Vorteil, dass eine unterschiedliche Auslegung der Verriegelungsfeder einerseits und der Rastierfeder andererseits erfolgen kann, womit dann auch unterschiedliche Betätigungskräfte einerseits für die Herbeiführung der Vorspannung der Verriegelungsfeder und andererseits für die Erzeugung der Rastierwirkung erforderlich sein können.

Infolge der Kopplung des Betätigungsorgans mit dem Abstützelement in Antriebsrichtung bei gleichzeitiger Entkopplung des Betätigungsorgans von dem Abstützelement in Rastierrichtung kann in einem Extremfall ein Überwinden eines Rastiervorsprungs mit einer Bewegung des Betätigungsorgans in Rastierrichtung erfolgen, ohne dass dies eine Bewegung des Abstützelements und damit eine Veränderung der Vorspannung der Verriegelungsfeder verbunden ist. Somit kann auch das eingangs erläuterte Problem der Ausführungsformen gemäß des Stands der Technik, dass für das Überwinden des Rastiervorsprungs eine Verriegelungskraft erzeugt werden muss, welche größer ist als die Verriegelungskraft in der Verriegelungsposition, vermieden werden.

Grundsätzlich sind beliebige Ausgestaltungen der Führung und der Freiheitsgrade des Betätigungsorgans im Rahmen der vorliegenden Erfindung möglich. Für eine besondere Ausgestaltung der Erfindung ist das Betätigungsorgan in einem Endbereich einer Bewegung in Antriebsrichtung, welche insbesondere einer minimalen Verriegelungskraft oder sogar bereits teilweise aus der Aufnahme bewegtem Verriegelungselement entspricht, in die Rastierrichtung bewegbar. Mit dieser Bewegung des Betätigungsorgans in Rastierrichtung gibt das Verriegelungselement die Aufnahme frei. Hierbei nimmt das Betätigungsorgan das Abstützelement mit, wozu die Entkopplung der Bewegung des Betätigungsorgans gegenüber dem Abstützelement in Rastierrichtung begrenzt sein kann. Mit derart vollständig freigegebener Aufnahme kann dann die Montage und Demontage des Lagerzapfens aus der Aufnahme (und damit die Montage und Demontage des Frontladers und des Traktors) erfolgen.

Für das Betätigungsorgan und/oder das Abstützelement für den Federfußpunkt könne beliebige Führungseinrichtungen zum Einsatz kommen. Für eine Ausgestaltung der Erfindung ist/sind das Betätigungsorgan und/oder das Abstützelement für den Federfußpunkt über eine Kulisse geführt. Derartige Kulissen stellen eine besonders zuverlässige Führung dar. Im einfachsten Fall kann eine derartige Kulisse von einer Langnut oder einem Langloch mit beliebigem Konturverlauf und unter Umständen auch variierender Breite gebildet sein, wobei die Langnut oder das Langloch auf kostengünstige Weise in eine Platte oder ein anderweitiges Bauelement eingebracht sein kann. Durch die Gestaltung der Kulisse, insbesondere deren Verlauf und/oder Breite, können Freiheitsgrade in vorgegebenem Ausmaß (Breite der Kulisse) vorgegeben und/oder verändert werden und Zwangsführungen in Antriebsrichtung und/oder Rastierrichtung (abschnittsweise oder kurvenförmig mit beliebigem Verlauf) gewährleistet werden.

Für eine besondere erfindungsgemäße Befestigungsvorrichtung werden/wird das Betätigungsorgan und/oder das Abstützelement für den Federfußpunkt um die Verriegelungsrichtung, welche vorzugsweise der Betätigungsrichtung des Verriegelungselements entspricht, verschwenkt. Möglich ist, dass eine Kulisse in einem hohlzylindrischen Führungselement gebildet ist, in welche dann ein Führungsvorsprung des Betätigungsorgans und/oder des Abstützelements eingreift. Für einen besonderen Vorschlag der Erfindung ist/sind die Kulisse für das Betätigungsorgan und/oder die Kulisse für das Abstützelement in einer oder zwei (ebenen, gekrümmten oder abgewinkelten) Platte(n) gebildet. Dieser Ausgestaltung liegt zugrunde, dass eine derartige Platte mit geringen Kosten gefertigt werden kann. Bei Einsatz einer derartigen Platte kann sich u. U. ein Führungsvorsprung des Betätigungsorgans oder des Abstützelements mit von dem Schwenkwinkel veränderlicher Erstreckung durch die in der Platte gebildete Kulisse erstrecken. Möglich ist, dass die die Kulisse ausbildende Platte weitere Funktionen erfüllt, beispielsweise tragende und/oder abdeckende Funktionen.

Sofern jeweils eine Kulisse einerseits für das Betätigungsorgan und andererseits für das Abstützelement vorgesehen sind, können diese Kulissen auf derselben Seite des Abstützelements (und damit von der Schwenkachse) angeordnet sein. Für einen besonderen Vorschlag der Erfindung sind aber die genannten Kulissen auf unterschiedlichen Seiten des Abstützelements angeordnet, wodurch veränderte Bauraumbedingungen geschaffen sind. Unter Umständen ist auch nur die Kulisse für das Betätigungsorgan auf der für den Bediener sichtbaren Seite anzuordnen, während es von Vorteil sein kann, wenn die Kulisse für das Abstützelement auf einer dem Bediener abgewandten Seite angeordnet ist.

Wie zuvor erwähnt kann sich je nach Schwenkwinkel das Betätigungsorgan, insbesondere ein Betätigungshebel, in unterschiedlichem Ausmaß durch die zugeordnete Kulisse erstrecken. Für eine besondere Ausgestaltungsform der Erfindung durchsetzt das Betätigungsorgan die zugeordnete Kulisse über den gesamten Betätigungsweg des Betätigungsorgans.

Entsprechendes kann für einen Führungsvorsprung des Abstützelements gelten. In besonderer Ausgestaltung der Erfindung ist der Führungsvorsprung des Abstützelements für einen Schwenkwinkelbereich, in welchem eine Veränderung der Vorspannung der Verriegelungsfeder in Verriegelungsrichtung erfolgt, in der zugeordneten Kulisse angeordnet. In diesem Schwenkwinkelbereich kann damit die Kulisse, wie auch zu dem eingangs angeführten Stand der Technik erläutert, als Wandler zwischen der Betätigungskraft einerseits und der zu erzeugenden bzw. zu verändernden Verriegelungskraft der Verriegelungsfeder dienen. Für einen anderen Schwenkwinkelbereich, in welchem das Verriegelungselement aus der Aufnahme in die Freigabeposition bewegt wird (oder umgekehrt), befindet sich der Führungsvorsprung des Abstützelements außerhalb der zugeordneten Kulisse. Möglich ist hierbei, dass das Betätigungsorgan für jeden Bewegungsbereich in einer Kulisse geführt ist, während das Abstützelement nur in einem Teilbewegungsbereich in der zugeordneten Kulisse geführt ist.

Grundsätzlich gibt es vielfältige Möglichkeiten für die konstruktive Ausgestaltung der Verriegelungsfeder und der Rastierfeder, wobei diese gleich oder unterschiedlich ausgebildet sein können. Um lediglich einige nicht beschränkende Beispiele zu nennen, kann die Verriegelungsfeder und/oder die Rastierfeder als einzelne Feder, als Federpaket, als spiralförmige Druckfeder, als Elastomerelement oder Verbundfeder o. ä. ausgebildet sein. In besonderer Ausgestaltung der erfindungsgemäßen Befestigungsvorrichtung sind/ist die Verriegelungsfeder und/oder die Rastierfeder mit mindestens einer Tellerfeder ausgebildet. Es hat sich gezeigt, dass eine derartige Tellerfeder kostengünstig bezogen werden kann und auch bei den hier vorliegenden rauen Einsatzbedingungen eine hohe Betriebssicherheit gewährleistet. Auch kann mittels einer Tellerfeder der vorhandene Bauraum optimal genutzt werden, wobei gleichzeitig die erforderlichen Kräfte in der Verriegelungsfeder und/oder Rastierfeder herbeigeführt werden können.

Grundsätzlich gibt es für die konstruktive Ausgestaltung der an der Befestigungsvorrichtung eingesetzten Bauelemente vielfältige Möglichkeiten. Für eine besondere konstruktive Ausgestaltung ist das Abstützelement als Hülse ausgebildet. Das Betätigungsorgan besitzt einen Kopplungsabschnitt, der in einer Innenbohrung der Hülse axial verschieblich, aber drehfest geführt ist. In diesem Fall bildet somit die axiale Verschieblichkeit die Entkopplung in Rastierrichtung, während die drehfeste Führung zwischen Hülse und Betätigungsorgan die Kopplung in Antriebsrichtung bildet. Hierbei kann die axial verschiebliche, aber drehfeste Führung auf vielfältige, dem Fachmann ersichtliche Weisen gewährleistet werden. Beispielsweise kann dies über eine Keilverzahnung zwischen Hülse und Betätigungsorgan, mindestens einem radialen Vorsprung der Hülse (oder des Betätigungsorgans), welche Aufnahme findet in einer entsprechenden radialen Vertiefung des Betätigungsorgans (oder der Hülse) o. ä. gewährleistet werden. Auch für die Anordnung der Rastierfeder gibt es im Rahmen der vorliegenden Erfindung grundsätzlich vielfältige Möglichkeiten. Für eine besondere erfindungsgemäße Ausgestaltung ist die Rastierfeder im Inneren der Hülse angeordnet. Ein Federfußpunkt der Rastierfeder ist an der Hülse abgestützt. Der andere Federfußpunkt der Rastierfeder ist an dem Kopplungsabschnitt abgestützt. Neben der kompakten, ineinander geschachtelten Ausgestaltung von Hülse, Kopplungsabschnitt und Rastierfeder kann zusätzlich eine derartige Ausgestaltung einen Schutz der Rastierfeder, beispielsweise gegenüber einer Verschmutzung, gewährleisten, da die Hülse gemeinsam mit dem Kopplungsabschnitt eine Art (weitestgehend) geschlossenes Gehäuse bildet.

In weiterer Ausgestaltung der Erfindung wirkt zwischen dem Betätigungsorgan und dem Abstützelement ein Wandler, welcher das Verhältnis der vom Benutzer manuell auf das Betätigungsorgan aufzubringenden Betätigungskraft gegenüber der hierdurch herbeigeführten Verriegelungskraft der Verriegelungsfeder verändert. Ein derartiger Wandler kann beliebig ausgebildet sein, beispielsweise entsprechend dem eingangs genannten Stand der Technik, mit einer Art Schneckentrieb, einer geneigten Kulisse, einer beliebigen getrieblichen Verbindung oder einer Hebeleinrichtung.

Für eine erfindungsgemäß Anwendung findet eine Befestigungsvorrichtung, wie diese zuvor erläutert worden ist, Einsatz, um eine Anbaugerät an einem Arbeitsfahrzeug lösbar zu befestigen, womit dann eine arbeitsfähig ausgebildete Arbeitsfahrzeugbaugruppe gebildet ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Befestigungsvorrichtung in einer Seitenansicht von links.
- **Fig. 2**: zeigt die Befestigungsvorrichtung gemäß Fig. 1 in einer Seitenansicht von rechts.
- **Fig. 3**: zeigt die Befestigungsvorrichtung gemäß Fig. 1 und 2 in einem Schnitt III-III.
- **Fig. 4**: zeigt schematisiert eine alternative Ausgestaltung einer erfindungsgemäßen Befestigungsvorrichtung in einer Seitenansicht.
- **Fig. 5**: zeigt Bauelemente der erfindungsgemäßen Befestigungsvorrichtung gemäß Fig. 4 in einem Teillängsschnitt.
- **Fig. 6**: zeigt die Befestigungsvorrichtung gemäß Fig. 1 bis 3 in einer Freigabeposition des Verriegelungselements.
- **Fig. 7**: zeigt einen Schnitt VII-VII durch die Befestigungsvorrichtung gemäß Fig. 6.
- **Fig. 8**: zeigt die Befestigungsvorrichtung gemäß Fig. 1 bis 3 sowie 6 und 7 in einer Verriegelungsposition des Verriegelungselements.
- **Fig. 9**: zeigt einen Schnitt IX durch die Befestigungsvorrichtung gemäß Fig. 8.
- **Fig. 10**: zeigt Bauelemente der erfindungsgemäßen Befestigungsvorrichtung gemäß Fig. 6 bis 9 in einem Längsschnitt.

### FIGURENBESCHREIBUNG

Eine Befestigungsvorrichtung 1 dient insbesondere einer Befestigung eines Frontladers im Bereich eines Anbauteil 2 des Frontladers an einem Traktor im Bereich eines Anbauhakens 3 des Traktors. Zur Vereinfachung sind in den Figuren nur das Anbauteil 2 des Frontladers und der Anbauhaken 3 des Traktors dargestellt, wobei hinsichtlich weiterer Details zu dem Frontlader einerseits und dem Traktor andererseits auf den eingangs angeführten Stand der Technik der Anmelderin verwiesen wird.

Das Anbauteil 2 ist mit zwei im Wesentlichen parallelen (Trag-)Platten 4, 5 gebildet, zwischen denen starr zwei Lagerzapfen 6, 7 gehalten sind. Hierbei ist der Lagerzapfen 7 in eine Fahrtrichtung 8 bzw. Erstreckungsrichtung des Frontladers vor dem Lagerzapfen 6 und unterhalb desselben angeordnet. Die (Trag-)Platten 4, 5 verfügen jeweils über eine Kulisse 9, 10, welche ungefähr in derselben Höhe angeordnet sind, wobei aber die Kulisse 10 in Fahrtrichtung 8 einen geringeren Abstand von dem Lagerzapfen 6 besitzt als die Kulisse 9. Die Kulisse 9 befindet sich hierbei vorzugsweise auf der Fahrzeugaussenseite.

Der Anbauhaken 3 ist in grober Näherung J-förmig ausgebildet. Der bogenförmig geschlungene Endbereich 11 des J bildet eine (erste) Aufnahme 12 aus. Diese Aufnahme 12 ist mit einer Eintrittsöffnung 13 gebildet, deren Abmessung größer ist als der Durchmesser des Lagerzapfens 6, so dass der Lagerzapfen 6 entgegen der Fahrtrichtung 8 in die Aufnahme 12 eintreten kann. Des Weiteren verfügt die Aufnahme 12 über eine teilzylindrische Abstützfläche 14, deren Durchmesser dem Durchmesser des Lagerzapfens 6 entspricht. In montiertem Zustand stützt sich der Lagerzapfen 6 möglichst großflächig über einen Umfangswinkel von maximal 180° an der Abstützfläche 14 ab. Für eine derartige Abstützung des Lagerzapfens 6 an der Abstützfläche 14 verbleibt unterhalb des Lagerzapfens 6 zu dem Anbauhaken 3 ein lichter Abstand 15, welcher ohne Einsatz eines Verriegelungselements 16 zur Folge hätte, dass eine Bewegung des Frontladers und des Anbauteils 2 mit dem Lagerzapfen 6 gegenüber dem Anbauhaken 3 und damit dem Traktor nach unten möglich wäre mit damit einhergehender unerwünschter Lösung der Befestigungsvorrichtung 1. Um dies zu vermeiden, ist in den lichten Zwischenraum zwischen Lagerzapfen 6 und den Anbauhaken 3 das Verriegelungselement 16, hier ein Keil, mit einer Verriegelungskraft 17 eingepresst. Infolge der Verriegelungskraft 17 ist der Lagerzapfen 6 einerseits zwischen der Abstützfläche 14 des Anbauhakens 3 und andererseits zwischen dem Anbauhaken 3 und dem hieran mit einer Schrägfläche abgestützten Verriegelungselement 16 verspannt oder eingeklemmt. Um für eine Demontage des Frontladers von dem Traktor den Lagerzapfen 6 aus der Aufnahme 12 zu entfernen, muss das Verriegelungselement 16 mit einer manuellen Betätigung aus der Aufnahme 12 entfernt werden.

In dem dem Endbereich 11 gegenüberliegenden Endbereich bildet der geradlinige Schenkel 18 des J eine Gabel 19 aus, welche in montiertem Zustand den Lagerzapfen 7 teilweise umgreift. Hierzu bildet die Gabel 19 eine teilzylindrische Abstützfläche 20 aus, deren Durchmesser dem Durchmesser des Lagerzapfens 7 entspricht und welche eine Umfangserstreckung von weniger als 180° besitzt. Mit der Gabel 19 und der Abstützfläche 20 ist eine (zweite) Aufnahme 21 für den Lagerzapfen 7 gebildet.

Der J-förmige Anbauhaken 3 ist, wie in den Figuren ersichtlich ist, (schräg) liegend angeordnet. Das Einbringen der Lagerzapfen 6, 7 kann mit dem Einfahrsystem der Anmelderin erfolgen, wie dieses in den eingangs genannten Produktprospekten der Anmelderin beschrieben ist.

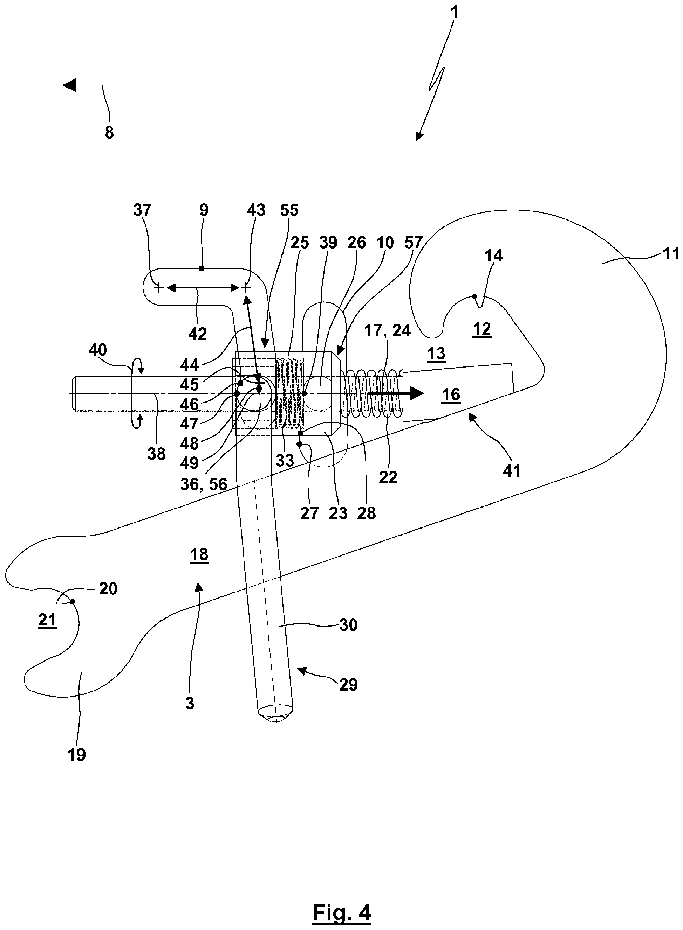

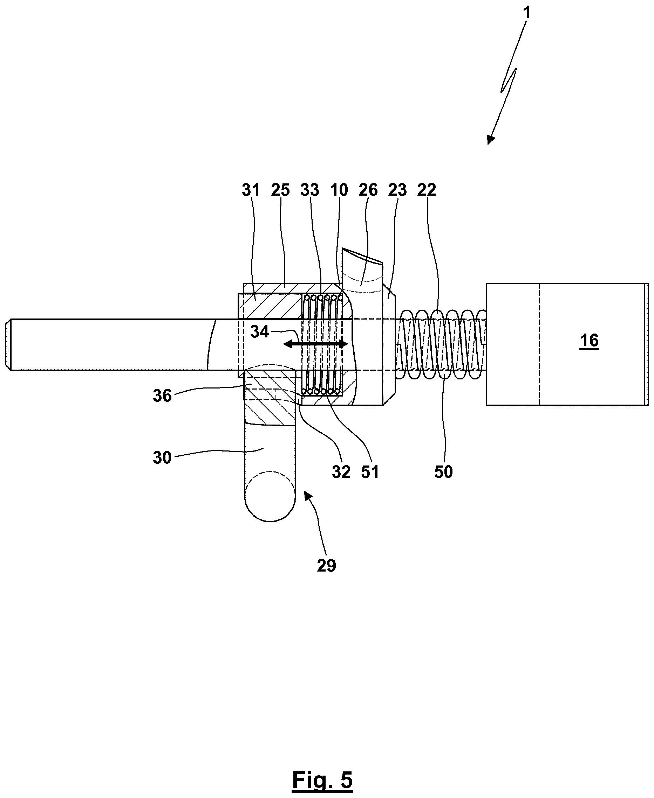

Zunächst auf Grundlage der Fig. 4 und 5 wird im Folgenden die Betätigung des Verriegelungselements 16 und die Abstützung desselben beschrieben:

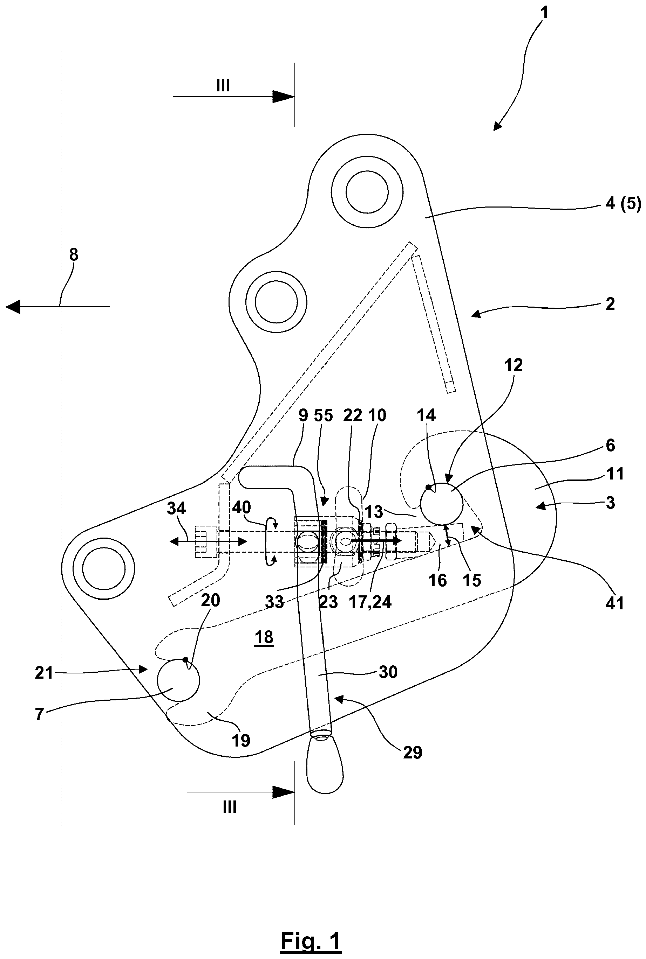

Das Verriegelungselement 16 ist über eine Verriegelungsfeder 22 an einem Abstützelement 23 abgestützt. Wird das Abstützelement 23 in einer Verriegelungsposition 41, in der gemäß Fig. 1 der Lagerzapfen 6 zwischen der Führungsfläche 14 des Anbauhakens 3 und dem Verriegelungselement 16 verspannt ist (in Fig. 4 nicht dargestellt), in Richtung der Verriegelungskraft 17 bzw. in eine Verriegelungsrichtung 24 bewegt, führt dies zu einer Veränderung der Vorspannung der Verriegelungsfeder 22 und damit einer Veränderung der Verriegelungskraft 17.

Für das dargestellte Ausführungsbeispiel ist das Abstützelement 23 als in Richtung des Verriegelungselements 16 geschlossene Hülse 25 mit einem im Wesentlichen U-förmigen Längsschnitt ausgebildet. Die Hülse 25 ist um eine Längsachse 38 derselben, welche koaxial zur Verriegelungsrichtung 24 orientiert ist, verschwenkbar. Eine Zwangskopplung einer Schwenkbewegung der Hülse 25 um ihre Längsachse 38 mit einer Bewegung in Verriegelungsrichtung 24 bzw. entlang der Längsache 38, zumindest über einen Teilschwenkwinkel, erfolgt dadurch, dass ein radialer Führungsvorsprung 26 des Abstützelements 23, welcher in Fig. 4 gestrichelt dargestellt ist, eingreift in die Kulisse 10.

Für eine Betriebsstellung, für welche die Verriegelungskraft 17 der Verriegelungsfeder 22 minimal ist, liegt der Führungsvorsprung 26 an einem Kontaktpunkt 27 der Kulisse 10 an. Wird ausgehend von dieser Betriebsstellung das Abstützelement 23 in eine Antriebsrichtung 40 (hier eine Verschwenkung um die Längsachse 38) in die in Fig. 4 dargestellte Verriegelungsposition 41 verschwenkt, gleitet der Führungsvorsprung 26 entlang der dem Verriegelungselement 16 abgewandten Führungsfläche 28 der Kulisse 10 bis zu einem hier mittigen Kontaktpunkt 39. Die Führungsfläche 28 ist, wie in Fig. 4 zu erkennen ist, gegenüber einer Querrichtung zur Längsachse und damit einer Querebene zur Längsachse 38 derart geneigt ausgebildet, dass mit zunehmender Verschwenkung des Abstützelements 23 in Antriebsrichtung 40 von dem Kontaktpunkt 27 in Richtung des Kontaktpunkts 39 das Abstützelement 23 weiter in Richtung des Verriegelungselements 16 verlagert wird, womit die Verriegelungskraft 17 erhöht wird.

Für den eingangs auf Grundlage der Produktprospekte der Anmelderin erläuterten Stand der Technik wird (abweichend zur vorliegenden Erfindung) das Abstützelement 23 über den in diesem Fall direkt hieran befestigen Betätigungshebel 30 verschwenkt. Für diese Ausgestaltungsform gemäß dem Stand der Technik ist aber die Kulisse 10 abweichend zu der Ausgestaltungsform gemäß Fig. 4 ausgebildet: Gemäß dem Stand der Technik besitzt die Kulisse 10 in der Verriegelungsposition 41 im Bereich des Kontaktpunkts 39 eine Rastiervertiefung, so dass mit Erreichen des Schwenkwinkels, welcher der Verriegelungsposition 41 entspricht, der Führungsvorsprung 26 infolge der Verriegelungskraft 17 in der Verriegelungsfeder 22 in die Rastiervertiefung gedrückt wird, womit ein unbeabsichtigtes Rückschwenken des Betätigungshebels unterbunden ist. Diese Ausgestaltungsform hat aber, wie eingangs erläutert, den Nachteil, dass zum Erreichen der Rastiervertiefung in der Kulisse ein der Rastiervertiefung benachbarter und diese begrenzender Rastiervorsprung überwunden werden muss, womit temporär manuell Verriegelungskräfte 17 erzeugt werden müssen, die größer sind als die in der Verriegelungsposition 41 wirkende Verriegelungskraft 17.

Abweichend hierzu ist die Kulisse 10 für die erfindungsgemäß Ausgestaltung gemäß Fig. 4 nicht mit einer derartigen Rastiervertiefung im Bereich des Kontaktpunkts 39 ausgebildet. Vielmehr ist die Führungsfläche 28 zwischen dem Kontaktpunkt 27 und dem Kontaktpunkt in der Verriegelungsstellung monoton oder stetig geneigt, wobei der Kontaktpunkt 39 der Führungsfläche 28 in der Verriegelungsposition 41 den kleinsten Abstand von dem Verriegelungselement 16 besitzt. Möglich ist aber auch, dass im Bereich des Kontaktpunkts 39 die Führungsfläche quer zur Längsachse 38 orientiert ist (in jedem Fall aber ohne eine Rastiervertiefung im Bereich des Kontaktpunktes 39).

Abweichend zu dem erläuterten Stand der Technik ist für die erfindungsgemäße Ausgestaltung das Betätigungsorgan 29 teilweise wie folgt von dem Abstützelement 16 entkoppelt:

Das Betätigungsorgan 29 ist mit einem Betätigungshebel 30 und einem starr hiermit verbundenen Kopplungsabschnitt 31 gebildet. Der Kopplungsabschnitt 31 ist
- drehfest hinsichtlich einer Verschwenkung in Antriebsrichtung 40,
- aber (insbesondere begrenzt) axial verschieblich in Richtung der Längsachse 38
mit der Hülse 25 gekoppelt. Für das dargestellte Ausführungsbeispiel erstreckt sich der Kopplungsabschnitt 31 im Inneren der Hülse 25, während der Betätigungshebel 30 ein auf der dem Verriegelungselement 16 abgewandten Seite offenes, in Richtung der Längsachse orientiertes Langloch 32 der Hülse 25 durchsetzt. Die drehfeste Verbindung zwischen dem Betätigungsorgan 29 und der Hülse 25 erfolgt über die Anlage des Betätigungshebels 30 in Antriebsrichtung 40 um die Längsachse 38 an den Begrenzungen des Langlochs 32. Für die Gewährleistung des axialen Freiheitsgrads kann sich der Kopplungsabschnitt 31 im Inneren der Hülse 25 axial bewegen, wobei sich hierbei der Betätigungshebel 30 entlang des Langlochs 32 bewegt. Zwischen der Hülse 25 und einer Stirnseite des Kopplungsabschnitts 31 ist eine Rastierfeder 33 gefangen, welche in eine Rastierrichtung 34, welche koaxial zur Verriegelungsrichtung 24 und der Längsachse 38 orientiert ist, wirkt.

Während einer Verschwenkung des Betätigungsorgans 29 erfolgt eine Führung des Betätigungsorgans 29 über die Kulisse 9, was insbesondere durch die Führung des Betätigungshebels 30 (oder eines anderen Führungsvorsprungs) entlang der Kulisse 9 erfolgt.

Im Folgenden wird der Vorgang der Befestigung des Anbauteils 2 an dem Anbauhaken 3 im Detail beschrieben:

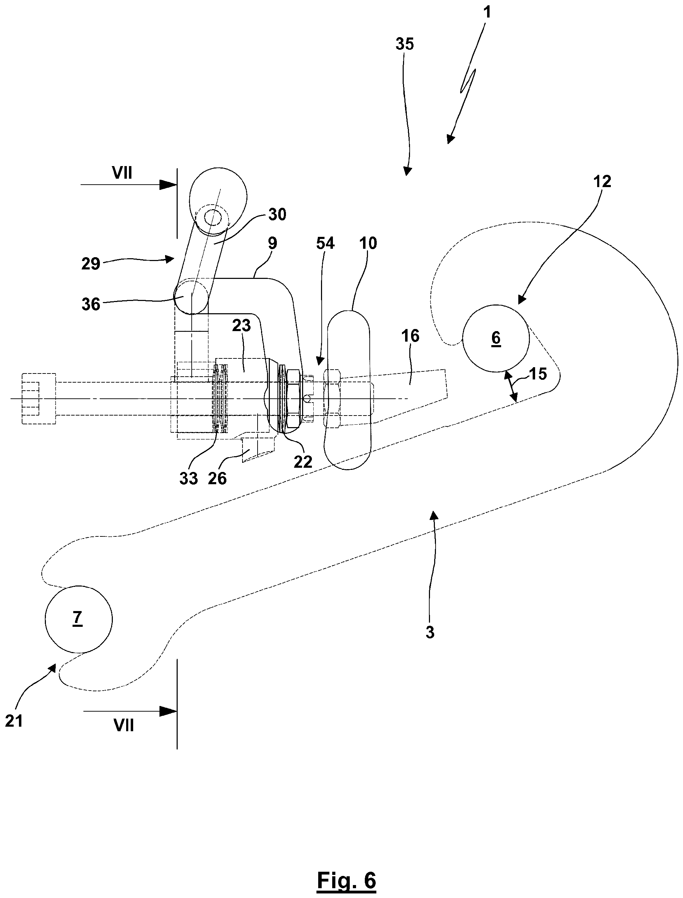

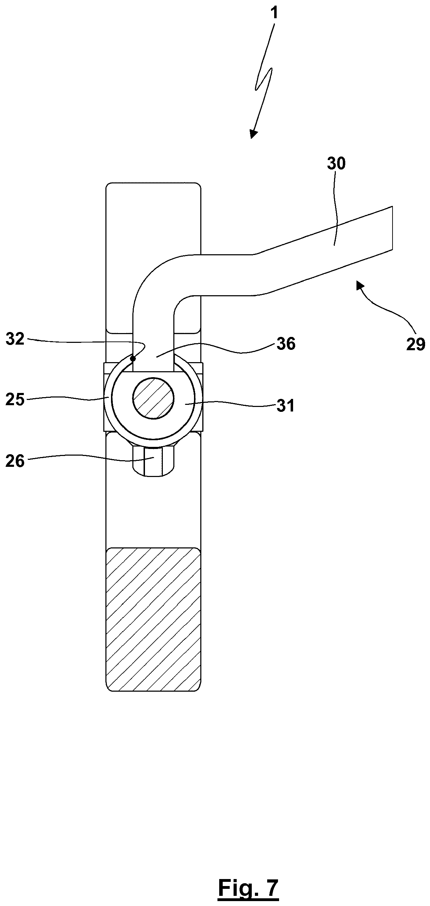

Zunächst werden die Lagerzapfen 6, 7 in die Aufnahmen 12, 21 des Anbauhakens 3 eingeführt, wie dies beispielsweise in den eingangs angeführten Produktprospekten der Anmelderin erläutert ist. Hierbei befindet sich die Befestigungsvorrichtung 1 zunächst in einer Freigabeposition 35, wie diese insbesondere in **Fig. 6** dargestellt ist. Der hier von dem Betätigungshebel 30 ausgebildete Führungsvorsprung 36 befindet sich in der Kulisse 9 in einer Ausgangsposition 37. Hingegen ist der Führungsvorsprung 26 aus der Kulisse 10 herausgeschwenkt und in Richtung der Längsachse 38 gegenüber der Kulisse 10 von der Aufnahme 12 wegverlagert (s. Fig. 6 und Fig. 7). Das Verriegelungselement 16 gibt in der Freigabeposition 35 die Aufnahme 12 frei, so dass der zugeordnete Lagerzapfen 6 in die Aufnahme 12 eingeführt werden kann.

Die Kulisse 9 besitzt einen Teilabschnitt 42, welcher geradlinig und parallel zur Längsachse 38 ausgebildet ist. Wird das Betätigungsorgan 29 mit dem Kopplungsabschnitt 31 entlang des Teilabschnitts 42 von der Ausgangsposition 37 in eine Zwischenposition 43 bewegt, nimmt der Kopplungsabschnitt 31 über die Rastierfeder 33 das Abstützelement 23 in Richtung der Aufnahme 12 mit. Hierbei bewegt sich auch der Führungsvorsprung 26 des Abstützelements 23 in Richtung der Aufnahme 12 und damit in den Axialbereich, in welchem die Kulisse 10 angeordnet ist. Allerdings ist auch weiterhin der Führungsvorsprung 26 aus der Kulisse 10 herausgeschwenkt.

Eine weitere Bewegung des Betätigungsorgans 29 erfolgt ausgehend von der Zwischenposition 43 über einen Teilabschnitt 44 der Kulisse 9, welcher gegenüber der Umfangsrichtung um die Längsachse 38 unter einem spitzen Winkel geneigt ist. Dies hat zur Folge, dass für die Bewegung des Betätigungsorgans 29 über den Teilabschnitt 44 der Kopplungsabschnitt 31 eine geringfügige Bewegung in Verriegelungsrichtung 24 ausführt und eine überlagerte Bewegung in Antriebsrichtung 40, wobei das Verhältnis der Bewegung in Verriegelungsrichtung 24 und in Antriebsrichtung 40 durch die Neigung der Kulisse 9 im Teilabschnitt 44 vorgegeben ist. Während der Bewegung über den Teilabschnitt 44 wird der Führungsvorsprung 26 in die Kulisse 10 eingeschwenkt unter erster Ausbildung eines Kontakts an dem Kontaktpunkt 27 mit weiterer Gleitbewegung entlang der Führungsfläche 28. Bei der Darstellung gemäß Fig. 4 ist zu beachten, dass sich die Kulissen 9 und 10 auf unterschiedlichen Seiten der Längsachse 38 befinden, so dass die Bewegung des von dem Betätigungshebel 30 ausgebildeten Führungsvorsprung 36 in Fig. 4 von oben nach unten in Richtung der Längsachse 38 verbunden ist mit der Bewegung des Vorsprungs 26 von unten nach oben in Richtung der Längsachse. Da im Bereich des Teilabschnitts 44 das Verriegelungselement 16 bereits einen Kontakt zu dem Lagerzapfen 6 ausgebildet hat, steigt mit der Bewegung des Betätigungsorgans 29 entlang des Teilabschnitts 44 bereits die Verriegelungskraft 17 in der Verriegelungsfeder 22, wobei das Ausmaß der Veränderung der Verriegelungskraft 17 in Abhängigkeit von der Verschwenkung in Antriebsrichtung 40 abhängt von der Neigung der Führungsfläche 28. Andererseits steigt mit der Bewegung des Führungsvorsprungs 36 entlang des Teilabschnitts 44 der Kulisse 9 auch die Vorspannkraft der Rastierfeder 33, wobei das Ausmaß der Veränderung der Vorspannkraft der Rastierfeder 33 mit einer Verschwenkung in Antriebsrichtung 40 abhängt sowohl von der Neigung der Kulisse 9 im Teilabschnitt 44 als auch von der Neigung der Führungsfläche 28. Am Ende des Teilabschnitts 44 hat das Betätigungsorgan 29 und dessen Führungsvorsprung 36 eine Zwischenposition 45 erreicht, im Bereich welcher die Kulisse 9 einen Rastiervorsprung 46 besitzt, welcher eine Rastiervertiefung 47 in der Kulisse 9 begrenzt. Im Bereich des Rastiervorsprungs 46 ist der Führungsvorsprung 36 in der Kulisse 9 am weitesten in Verriegelungsrichtung 24 in Richtung der Aufnahme 12 verlagert.

Ausgehend von der Zwischenposition 45 wird das Betätigungsorgan 29 über den letzten Teilabschnitt 48 bewegt, bis der Führungsvorsprung 36 eine Verriegelungsposition 49 in der Kulisse 9 erreicht hat, in welcher der Führungsvorsprung 36 in der Rastiervertiefung 47 angeordnet ist.

Entscheidend ist, dass während der Bewegung entlang der Teilabschnitte 44, 48 der Kulisse 9 die Verriegelungskraft 17 in der Verriegelungsfeder 22 abhängt von der Bewegung in Antriebsrichtung 40 und dem Gleiten des Führungsvorsprungs 26 entlang der Führungsfläche 28, während die Verriegelungskraft 17 nicht beeinflusst ist durch die Vorspannkraft der Rastierfeder 33 und der Kontur der Kulisse 9 in den Teilabschnitten 44, 47 mit dem Rastiervorsprung 46 und der Rastiervertiefung 47. In der Verriegelungsposition 49 ist einerseits die maximale Verriegelungskraft 17 erreicht. Andererseits befindet sich der Führungsvorsprung 36 in der Rastiervertiefung 47, womit das Betätigungsorgan 29 gegen eine unbeabsichtigte Bewegung von der Verriegelungsposition 49 weg gesichert ist. Hierbei kann die Sicherungskraft gegen eine Bewegung aus der Verriegelungsposition 49 vorgegeben werden durch die Steifigkeit der Rastierfeder 33 und die Kontur der Kulisse 9 im Bereich der Teilabschnitte 44, 48 und insbesondere den Axial-versatz zwischen dem Rastiervorsprung 46 gegenüber der Rastiervertiefung 47. Je nach Gestaltung des Führungsvorsprungs 36 und der Kontur der Kulisse 9 kann auch nicht nur eine Rastierung bewirkt werden. Vielmehr kann auch eine Verriegelung derart erfolgen, dass die reine Applikation von Kräften auf das Betätigungsorgan 29 in Antriebsrichtung 40 nicht zum Lösen der Rastierung führt, sondern manuelle Betätigungskräfte auf das Betätigungsorgan 29 aufgebracht werden müssen in Richtung der Längsachse 38, um die Verriegelung zu lösen.

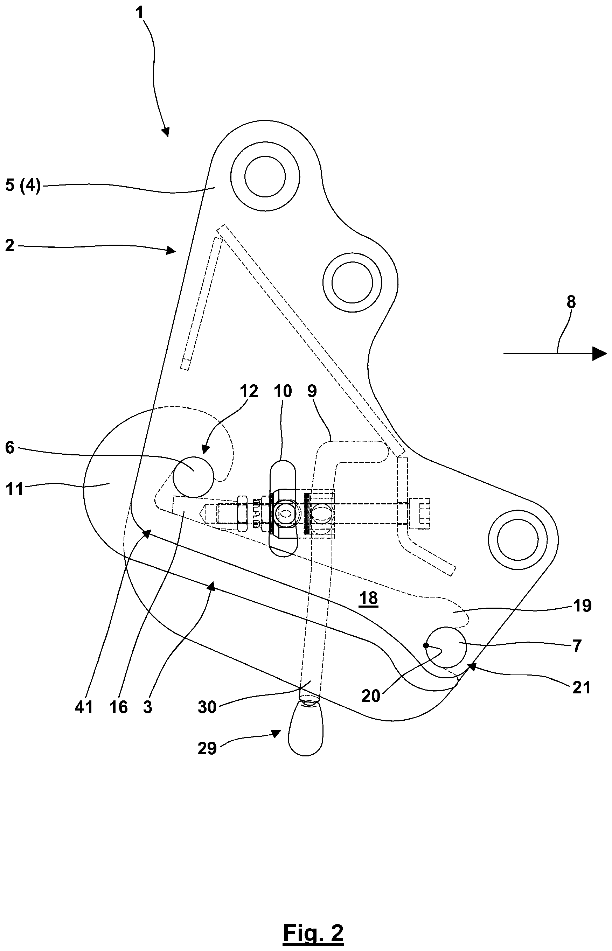

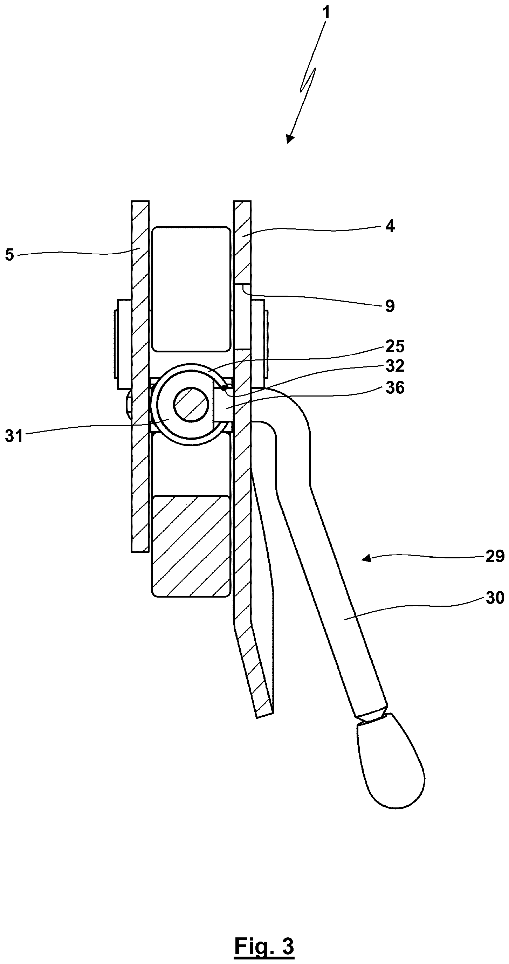

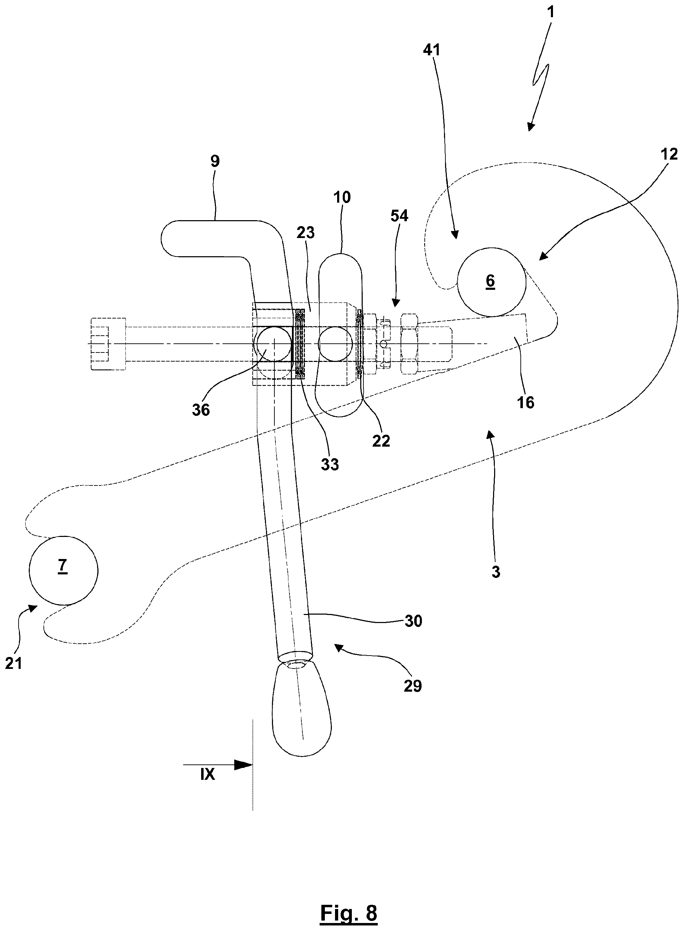

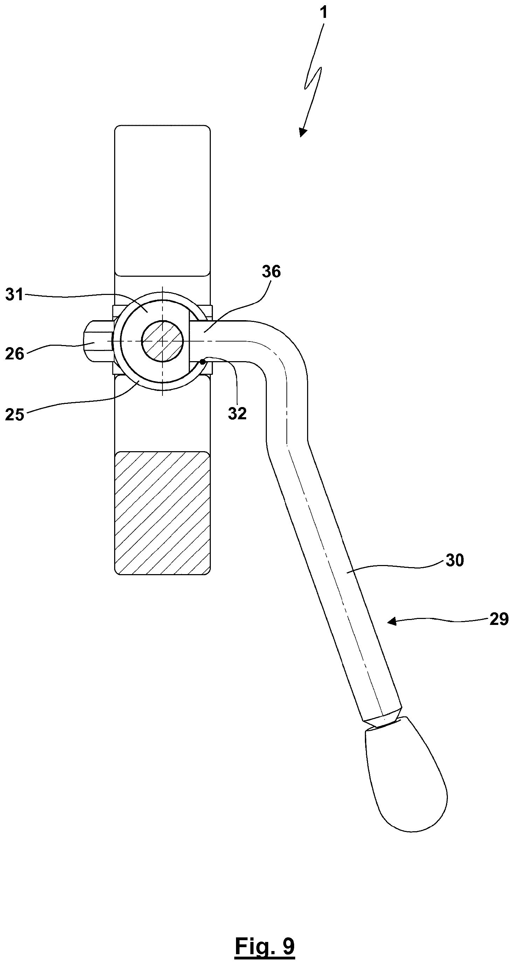

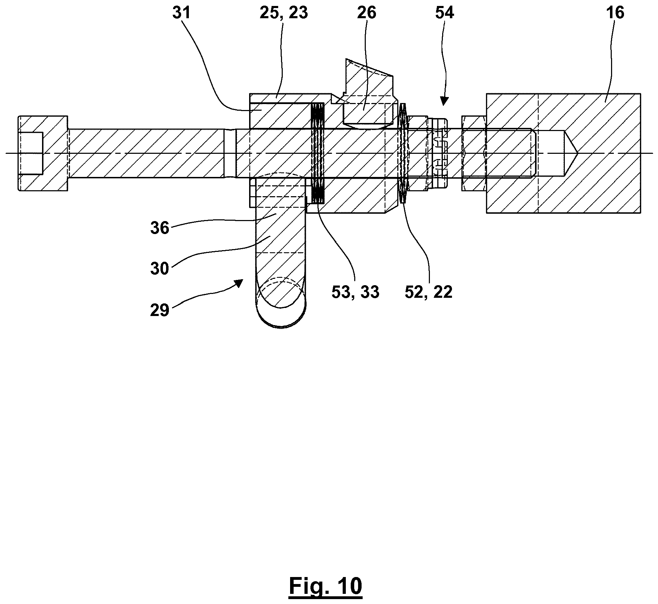

Für die Rastierfeder 33 einerseits und die Verriegelungsfeder 22 andererseits kann die Federsteifigkeit je nach den Bedürfnissen einerseits für die Verriegelung des Verriegelungselements 16 und andererseits für die Herbeiführung der Rastierung individuell angepasst sein. Vorzugsweise besitzt die Verriegelungsfeder 22 eine größere Steifigkeit als die Rastierfeder 33. Für das in den Fig. 4 und 5 dargestellte Ausführungsbeispiel sind die Verriegelungsfeder 22 und die Rastierfeder 33 jeweils als Spiralfedern 50, 51 ausgebildet. Hingegen findet gemäß **Fig. 1 bis 3** **und** **6 bis 10** jeweils ein Paket aus Tellerfedern 52, 53 Einsatz. Darüber hinaus ist gemäß dem Ausführungsbeispiel gemäß Fig. 1 bis 3 und 6 bis 10 eine Einstelleinrichtung 54 vorhanden, über welche eine Feinjustage der Befestigungsvorrichtung 1 möglich ist, insbesondere zur Anpassung an unterschiedliche Fertigungstoleranzen und unterschiedliche Bauteilvarianten. Über die Einstelleinrichtung 54 kann der axiale Abstützort des dem Verriegelungselement 16 Federfußpunkts der Verriegelungsfeder 22 eingestellt werden. Hinsichtlich weiterer Details zu der Einstelleinrichtung 54 wird auf die eingangs angeführten Produktprospekte der Anmelderin verwiesen.

Das Verriegelungselement 16 kann grundsätzlich bereits in dem Teilabschnitt 42 zur Anlage an den in der Aufnahme 12 angeordneten Lagerzapfen 6 kommen. Vorzugsweise erfolgt dies aber erst im Bereich des Teilabschnitts 44.

Mit der Rastierfeder 33 und der Kulisse 9 mit deren Rastiervorsprung 46 und der Rastiervertiefung 47 ist eine Rastiereinrichtung 55 gebildet. Hierbei bildet der Führungsvorsprung 36 ein mit der Rastiervertiefung 47 in Wechselwirkung tretende Rastierelement 56.

Die Wechselwirkung des Führungsvorsprungs 26 mit der geneigten Kulisse 10 bzw. der Führungsfläche 28 bildet einen Wandler 57, welcher eine vom Benutzer in Antriebsrichtung aufgebrachte Betätigungskraft umwandelt in eine größere Verriegelungskraft 17.

Für die Auslegungskriterien, insbesondere die Steifigkeiten der eingesetzten Verriegelungsfeder 22 und der Rastierfeder 33, die Beaufschlagungswege derselben und die Wege und Neigungswinkel der Kulissen 9, 10 sowie die Tiefe der Rastvertiefung 47 gegenüber dem Rastiervorsprung 46 gibt es vielfältige Möglichkeiten, welche durch die folgenden Beispiele nicht eingeschränkt werden sollen:
- Für eine Auslegungskriterium ist die Steifigkeit der Verriegelungsfeder 22 zwei- bis achtmal (beispielsweise 2,5- bis 6-mal oder 3- bis 5-mal, insbesondere 3,5- bis 4-mal) so groß wie die Steifigkeit der Rastierfeder 33.
- Für ein Auslegungskriterium liegt die Steifigkeit der Verriegelungsfeder 22 im Bereich von 2.000 N/mm bis 4.000 N/mm (beispielsweise 2.400 N/mm bis 2.800 N/mm), während die Steifigkeit der Rastierfeder 33 im Bereich von 500 N/mm bis 1.000 N/mm (beispielsweise 600 N/mm bis 800 N/mm) liegen kann. Haben die Verriegelungsfeder 22 und/oder die Rastierfeder 33 eine nichtlineare Kennlinie, insbesondere infolge einer Verwendung von Tellerfedern, kann es sich bei den angegebenen Steifigkeiten um gemittelte Steifigkeiten handeln, welche beispielsweise im Bereich von 25 % bis 75 % des möglichen Federweges gemittelt sind.
- Für ein Auslegungskriterium beträgt der Neigungswinkel der Kulisse 9 im Abschnitt 44 6° bis 10° (beispielsweise 7° bis 9° oder 7,5° bis 8,5°). Möglich ist, dass der Neigungswinkel der Kulisse 10 im Abschnitt 29 5° bis 10° beträgt (beispielsweise 6° bis 8° oder 6,5° bis 7,5°). Möglich ist auch, dass der Neigungswinkel der Kulisse 10 im Abschnitt 29 kleiner ist als der Neigungswinkel der Kulisse 9 im Abschnitt 44.
- Für ein Auslegungskriterium beträgt die Tiefe der Rastvertiefung 47 gegenüber dem Rastiervorsprung 46 1 mm bis 3 mm (beispielsweise 1,5 mm bis 2,5 mm).

Die zuvor erläuterten Auslegungskriterien können einzeln ohne Verwirklichung der anderen Auslegungskriterien oder in beliebiger Kombination von mehreren Auslegungskriterien Einsatz finden. Vorzugsweise finden aber kumulativ die genannten Auslegungskriterien Einsatz.

### BEZUGSZEICHENLISTE

- 1: Befestigungsvorrichtung
- 2: Anbauteil
- 3: Anbauhaken
- 4: (Trag-)Platte
- 5: (Trag-)Platte
- 6: Lagerzapfen
- 7: Lagerzapfen
- 8: Fahrtrichtung
- 9: Kulisse
- 10: Kulisse
- 11: Endbereich
- 12: Aufnahme
- 13: Eintrittsöffnung
- 14: Abstützfläche
- 15: Abstand
- 16: Verriegelungselement
- 17: Verriegelungskraft
- 18: Schenkel
- 19: Gabel
- 20: Abstützfläche
- 21: Aufnahme
- 22: Verriegelungsfeder
- 23: Abstützelement
- 24: Verriegelungsrichtung
- 25: Hülse
- 26: Führungsvorsprung
- 27: Kontaktpunkt
- 28: Führungsfläche
- 29: Betätigungsorgan
- 30: Betätigungshebel
- 31: Kopplungsabschnitt
- 32: Langloch
- 33: Rastierfeder
- 34: Rastierrichtung
- 35: Freigabeposition
- 36: Führungsvorsprung
- 37: Ausgangsposition
- 38: Längsachse
- 39: Kontaktpunkt
- 40: Antriebsrichtung
- 41: Verriegelungsposition
- 42: Teilabschnitt
- 43: Zwischenposition
- 44: Teilabschnitt
- 45: Zwischenposition
- 46: Rastiervorsprung
- 47: Rastiervertiefung
- 48: Teilabschnitt
- 49: Verriegelungsposition
- 50: Spiralfeder
- 51: Spiralfeder
- 52: Tellerfeder
- 53: Tellerfeder
- 54: Einstelleinrichtung
- 55: Rastiereinrichtung
- 56: Rastierelement
- 57: Wandler

## Patentansprüche

1. Befestigungsvorrichtung (1) für eine Befestigung eines Anbaugeräts (2) an einem Arbeitsfahrzeug (3) mit
a) einem Verriegelungselement (16) für eine am Arbeitsfahrzeug angeordnete Aufnahme (12), wobei das Verriegelungselement (16) in einer Verriegelungsposition (41) über eine Verriegelungsfeder (22) in eine Verriegelungsrichtung (24) beaufschlagt ist und über die Verriegelungsfeder (22) an einem Abstützelement (23) abgestützt ist, womit mit einer Verriegelungskraft ein Lagerzapfen des Anbaugeräts zwischen der Aufnahme und dem Verriegelungselement verklemmbar und fixierbar ist, und
b) einem manuell bewegbaren Betätigungsorgan (29),
ba) welches in eine Antriebsrichtung (40) mit dem Abstützelement (23) für einen Federfußpunkt der Verriegelungsfeder (22) derart gekoppelt ist, dass eine Bewegung des Betätigungsorgans (29) in die Antriebsrichtung (40) eine Bewegung des Abstützelements (23) derart verursacht, dass sich die Verrieglungskraft (17) der Verriegelungsfeder (22) in Verriegelungsrichtung (24) verändert,
bb) welches in eine Rastierrichtung (34), welche von der Antriebsrichtung (40) abweicht, gegenüber dem Abstützelement (23) bewegbar ist, ohne dass sich die Verriegelungskraft (17) der Verriegelungsfeder (22) in Verriegelungsrichtung (24) verändert, und
c) einer Rastiereinrichtung (55), über welche das Betätigungsorgan (29) in der Verriegelungsposition (41) gegenüber einer ungewollten Bewegung gesichert ist, wobei in der Rastiereinrichtung (55) zur Erzeugung der Rastierwirkung über eine Rastierfeder (33) ein Rastierelement (56) in Rastierrichtung (34) in eine Rastiervertiefung (47) beaufschlagt ist.

2. Befestigungsvorrichtung (1) nach Anspruch 1, **dadurch gekennzeichnet, dass** das Betätigungsorgan (29) in einem Endbereich einer Bewegung in Antriebsrichtung (40) in die Rastierrichtung (34) bewegbar ist, womit das Verriegelungselement (16) die Aufnahme (12) freigibt.

3. Befestigungsvorrichtung (1) nach einem der vorhergehenden Ansprüche, **dadurch gekennzeichnet, dass** das Betätigungsorgan (29) und/oder das Abstützelement (23) für den Federfußpunkt der Verriegelungsfeder (22) über eine Kulisse (9; 10) geführt ist/sind.

4. Befestigungsvorrichtung (1) nach Anspruch 3, **dadurch gekennzeichnet, dass**
a) das Betätigungsorgan (29) und/oder das Abstützelement (23) für den Federfusspunkt der Verriegelungsfeder (22) um die Verriegelungsrichtung (24) verschwenkt werden/wird und
b) die Kulisse (9) für das Betätigungsorgan (2) und/oder die Kulisse (10) für das Abstützelement (23) in einer Platte (4, 5) gebildet sind/ist.

5. Befestigungsvorrichtung (1) nach Anspruch 4, **dadurch gekennzeichnet, dass** die Kulisse (9) für das Betätigungsorgan (29) und die Kulisse (1) für das Abstützelement (23) jeweils in einer Platte (4, 5) gebildet sind, wobei die beiden Platten (4, 5) auf unterschiedlichen Seiten des Abstützelements (23) angeordnet sind.

6. Befestigungsvorrichtung (1) nach einem der vorhergehenden Ansprüche, **dadurch gekennzeichnet, dass** das Betätigungsorgan (2) die zugeordnete Kulisse (9) über den gesamten Betätigungsweg des Betätigungsorgans (29) durchsetzt.

7. Befestigungsvorrichtung (1) nach einem der vorhergehenden Ansprüche, **dadurch gekennzeichnet, dass** ein Führungsvorsprung (26) des Abstützelements (23)
a) für einen Schwenkwinkelbereich, in welchem eine Veränderung der Verriegelungskraft (17) der Verriegelungsfeder (22 in Verriegelungsrichtung (24) erfolgt, in der zugeordneten Kulisse (10) angeordnet ist und
b) für einen anderen Schwenkwinkelbereich, in welchem das Verriegelungselement (16) aus der Aufnahme (12) bewegt wird oder in diese bewegt wird, außerhalb der Kulisse (10) angeordnet ist.

8. Befestigungsvorrichtung (1) nach einem der vorhergehenden Ansprüche, **dadurch gekennzeichnet, dass** die Verriegelungsfeder (22) und/oder die Rastierfeder (33) mit mindestens einer Tellerfeder (52; 53) ausgebildet sind/ist.

9. Befestigungsvorrichtung (1) nach einem der vorhergehenden Ansprüche, **dadurch gekennzeichnet, dass** das Abstützelement (23) als Hülse (25) ausgebildet ist und das Betätigungsorgan (29) einen Kopplungsabschnitt (31) besitzt, der in einer Ausnehmung der Hülse (25) axial in Rastierrichtung (34) verschieblich, aber drehfest in Antriebsrichtung (40) geführt ist.

10. Befestigungsvorrichtung (1) nach Anspruch 9, **dadurch gekennzeichnet, dass** die Rastierfeder (33) im Inneren der Hülse (25) angeordnet ist, wobei
a) ein Federfußpunkt der Rastierfeder (33) an der Hülse (25) abgestützt ist und
b) der andere Federfußpunkt der Rastierfeder (33) an dem Kopplungsabschnitt (31) abgestützt ist.

11. Befestigungsvorrichtung (1) nach einem der vorhergehenden Ansprüche, **dadurch gekennzeichnet, dass** zwischen dem Betätigungsorgan (29) und dem Abstützelement (23) eine Wandler (57) wirkt, welcher eine auf das Betätigungsorgan (29) wirkende manuelle Betätigungskraft wandelt in eine größere Kraft, welche die Rastierkraft (17) der Verriegelungsfeder (22) verändert.

12. Arbeitsfahrzeugbaugruppe mit einem Arbeitsfahrzeug und mindestens einem Anbaugerät, welches über eine Befestigungsvorrichtung (1) nach einem der vorhergehenden Ansprüche lösbar an dem Arbeitsfahrzeug befestigt ist.

## Claims

1. Mounting device (1) for mounting an attachment (2) to a utility vehicle (3) with
a) a locking element (16) for a receptacle (12) arranged on the utility vehicle, where the locking element (16) is biased in a locking position (41)into a locking direction (24) via a locking spring (22) and the locking element (16) is supported by the locking spring (22) on a supporting element (23), in which way a bearing stud of the attachment is able to be clamped and fixed between the receptacle and the locking element with a locking force, and
b) a manually movable actuation organ (29),
ba) which is coupled in a driving direction (40) with the supporting element (23) for a spring base point of the locking spring (22) in such a way that a movement of the actuation organ (29) into the driving direction (40) causes a movement of the supporting element (23) in such a way that the locking force (17) of the locking spring (22) in the locking direction (24) changes,
bb) which is movable with respect to the supporting element (23) in a latching direction (34) different from the driving direction (40) without the locking force (17) of the locking spring (22) changing in the locking direction (24), and
c) a latching device (55) by which the actuation organ (29) is secured against an undesired movement in the locking position (41), where in the latching device (55) a latching element (56) is biased by a latching spring (33) in the latching direction (34) into a latching recess (47) for creating the latching effect.

2. Mounting device (1) according to claim 1, **characterised in that** in an end portion of a movement in the driving direction (40) the actuation organ (29) is movable in the latching direction (34), in which way the locking element (16) releases the receptacle (12).

3. Mounting device (1) according to one of the preceding claims, **characterised in that** the actuation organ (29) and/or the supporting element (23) for the spring base point of the locking spring (22) is/are guided via a link (9; 10) or slotted link.

4. Mounting device (1) according to claim 3, **characterised in that**
a) the actuation organ (29) and/or the supporting element (23) for the spring base point of the locking spring (22) are/is pivoted around the locking direction (24) and
b) the link (9) for the actuation organ (2) and/or the link (10) for the supporting element (23) are/is formed in a plate (4, 5).

5. Mounting device (1) according to claim 4, **characterised in that** the link (9) for the actuation organ (29) and the link (1) for the supporting element (23) are each formed in a plate (4, 5), where the two plates (4, 5) are arranged on different sides of the supporting element (23).

6. Mounting device (1) according to one of the preceding claims, **characterised in that** the actuation organ (2) penetrates the corresponding link (9) over the entire actuation path of the actuation organ (29).

7. Mounting device (1) according to one of the preceding claims, **characterised in that** a guiding protrusion (26) of the supporting element (23)
a) is arranged in the assigned link (10) for a pivoting angle portion in which a change of the locking force (17) of the locking spring (22) in the locking direction (24) occurs and
b) is arranged outside the link (10) for a different pivoting angle portion in which the locking element (16) is moved out of the receptacle (12) or into the receptacle (12).

8. Mounting device (1) according to one of the preceding claims, **characterised in that** the locking spring (22) and/or the latching spring (33) comprise/comprises at least one disc spring (52; 53).

9. Mounting device (1) according to one of the preceding claims, **characterised in that** the supporting element (23) is realized as a sleeve (25) and the actuation organ (29) has a coupling portion (31), which is guided to be slidable axially in the latching direction (34) in a recess of the sleeve (25), but to form a driving connection in the driving direction (40).

10. Mounting device (1) according to claim 9, **characterised in that** the latching spring (33) is arranged in the interior of the sleeve (25), where
a) a spring base point of the latching spring (33) is supported on the sheath (25) and
b) the other spring base point of the latching spring (33) is supported on the coupling portion (31).

11. Mounting device (1) according to one of the preceding claims, **characterised in that** between the actuation organ (29) and the supporting element (23) a converter (57) is effective, which converts a manual actuation force biasing the actuation organ (29) into a larger force which changes the latching force (17) of the locking spring (22).

12. Utility vehicle construction unit with a utility vehicle and at least one attachment which is mounted detachably to the utility vehicle via a mounting device (1) according to one of the preceding claims.

## Revendications

1. Dispositif de fixation (1) pour une fixation d'un équipement (2) sur un véhicule de travail (3), avec
a) un élément de verrouillage (16) pour un logement (12) disposé sur le véhicule de travail, l'élément de verrouillage (16) étant, dans une position de verrouillage (41), manoeuvré dans une direction de verrouillage (24) par le biais d'un ressort de verrouillage (22), et étant appuyé sur un
élément d'appui (23) par le biais du ressort de verrouillage (22), un tourillon de l'équipement pouvant, avec une force de verrouillage, être serré et fixé entre le logement et l'élément de verrouillage, et
b) un organe d'actionnement (29) mobile manuellement,
ba) qui, dans une direction d'entraînement (40), est couplé à l'élément d'appui (23) pour un point de pied de ressort du ressort de verrouillage (22) de telle sorte qu'un mouvement de l'organe d'actionnement (29) dans la direction d'entraînement (40) provoque un mouvement de l'élément d'appui (23) de telle sorte que la force de verrouillage (17) du ressort de verrouillage (22) dans la direction de verrouillage (24) varie,
bb) qui est mobile vis-à-vis de l'élément d'appui (23) dans une direction d'encliquetage (34) qui s'écarte de la direction d'entraînement (40), sans que la force de verrouillage (17) du ressort de verrouillage (22) dans la direction de verrouillage (24) varie, et
c) un système d'encliquetage (55) par le biais duquel l'organe d'actionnement (29) est, dans la position de verrouillage (41), bloqué vis-à-vis d'un mouvement indésirable, un élément d'encliquetage (56) étant, dans le système d'encliquetage (55), manoeuvré par le biais d'un ressort d'encliquetage (33) dans la direction d'encliquetage (34) dans un creux d'encliquetage (47).

2. Dispositif de fixation (1) selon la revendication 1, **caractérisé en ce que** l'organe d'actionnement (29) est mobile dans la direction d'encliquetage (34) dans une zone extrême d'un mouvement dans la direction d'entraînement (40), ce qui fait que l'élément de verrouillage (16) libère le logement (12).

3. Dispositif de fixation (1) selon l'une des revendications précédentes, **caractérisé en ce que** l'organe d'actionnement (29) et/ou l'élément d'appui (23) pour le point de pied de ressort du ressort de verrouillage (22) est/sont guidé(s) par le biais d'une coulisse (9 ; 10).

4. Dispositif de fixation (1) selon la revendication 3, **caractérisé en ce que**
a) l'organe d'actionnement (29) et/ou l'élément d'appui (23) pour le point de pied de ressort du ressort de verrouillage (22) sont/est pivoté(s) autour de la direction de verrouillage (24), et
b) la coulisse (9) pour l'organe d'actionnement (2) et/ou la coulisse (10) pour l'élément d'appui (23) sont/est formée(s) dans une platine (4, 5).

5. Dispositif de fixation (1) selon la revendication 4, **caractérisé en ce que** la coulisse (9) pour l'organe d'actionnement (29) et la coulisse (1) pour l'élément d'appui (23) sont formées dans une platine (4, 5), les deux platines (4, 5) étant disposées sur différents côtés de l'élément d'appui (23).

6. Dispositif de fixation (1) selon l'une des revendications précédentes, **caractérisé en ce que** l'organe d'actionnement (2) pénètre dans la coulisse (9) affectée sur toute la course d'actionnement de l'organe d'actionnement (29).

7. Dispositif de fixation (1) selon l'une des revendications précédentes, **caractérisé en ce qu**'une saillie de guidage (26) de l'élément d'appui (23)
a) est disposée dans la coulisse (10) affectée pour une plage angulaire de pivotement dans laquelle une variation de la force de verrouillage (17) du ressort de verrouillage (22) s'effectue dans la direction de verrouillage (24), et
b) est disposée à l'extérieur de la coulisse (10) pour une autre plage angulaire de pivotement dans laquelle l'élément de verrouillage (16) est extrait du logement (12) ou est introduit dans celui-ci.

8. Dispositif de fixation (1) selon l'une des revendications précédentes, **caractérisé en ce que** le ressort de verrouillage (22) et/ou le ressort d'encliquetage (33) sont/est constitué(s) d'au moins une rondelle Belleville (52 ; 53).

9. Dispositif de fixation (1) selon l'une des revendications précédentes, **caractérisé en ce que** l'élément d'appui (23) est constitué en tant que manchon (25), et l'organe d'actionnement (29) possède un tronçon de couplage (31) qui est guidé dans un creux du manchon (25) de façon coulissante axialement dans la direction d'encliquetage (34) mais bloqué en rotation dans la direction d'entraînement (40).

10. Dispositif de fixation (1) selon la revendication 9, **caractérisé en ce que** le ressort d'encliquetage (33) est disposé dans l'intérieur du manchon (25),
a) un point de pied de ressort du ressort d'encliquetage (33) étant appuyé sur le manchon (25), et
b) l'autre point de pied de ressort du ressort d'encliquetage (33) étant appuyé sur le tronçon de couplage (31).

11. Dispositif de fixation (1) selon l'une des revendications précédentes, **caractérisé en ce que,** entre l'organe d' actionnement (29) et l'élément d' appui (23), u n convertisseur (57) agit, qui convertit une force d'actionnement manuelle agissant sur l'organe d'actionnement (29) en une force plus importante qui fait varier la force de verrouillage (17) du ressort de verrouillage (22).

12. Groupe d'éléments de construction de véhicule de travail, avec un véhicule de travail et au moins un équipement qui est fixé sur le véhicule de travail de façon détachable par le bais d'un dispositif de fixation (1) selon l' une des revendications précédentes.
